# EUROPEAN PATENT APPLICATION

(11) **EP 3 617 992 A1**
(43) Date of publication of application: **04.03.2020**
(21) Application number: 18791558.2
(22) Date of filing: 23.04.2018
(51) Int. Cl.: G06T 7/00, A44C 25/00

(54) **MEMBER AUTHENTICATION METHOD**

(30) Priority: 24.04.2017 JP 2017085133
(71) Applicant: Tanaka, Yoshiko, Yokohama-shi, Kanagawa 230-0062 (JP)
(72) Inventor: Tanaka, Yoshiko, Yokohama-shi, Kanagawa 230-0062 (JP)
(74) Representative: Weickmann & Weickmann PartmbB
(86) International application number: PCT/JP2018/016422
(87) International publication number: WO 2018/199009

(57) **Abstract**

A confirming method of membership, comprising: identifying, under a visible light, a physical arrangement of all diamonds (13) disposed on a single support product (12); identifying, under ultraviolet radiation, an arrangement of a diamond or diamonds (13) having a blue fluorescent equal to or stronger than strong blue in the physical arrangement; and distinguishing a group of all the diamonds (13) in the physical arrangement having a blue fluorescent equal to or stronger than strong blue, from a group of the diamonds on the single support product at least partly including a diamond or diamonds not having a blue fluorescent equal to or stronger than strong blue.

## Description

### TECHNICAL FIELD

The present invention is related to a confirming method of membership.

### BACKGROUND ART

Patent literature 1 discloses a membership card utilized in purchases at vending machines. The membership number and the expiration date are recorded in the membership card. The membership number and the expiration date are compared with a corresponding membership information recorded in the vending machines.

### CITATION LIST

### PATENT LITERTURE

Patent Literature 1: Japanese Patent No. 6103462
Patent Literature 2: PCT International Publication WO 2010/052702

### SUMMARY OF INVENTION

### TECHNICAL PROBLEM

The technique of Patent Literature 1 requires storage devices holding a tremendous amount of data which proportionally increases as the number of members increases. A work to record the information is troublesome. And still, the system requires a backup copy of such data. And the centralized management of the data should induce the utilization of communication devices and the necessity of firm security.

Patent Literature 2 discloses diamonds having a blue fluorescence arranged in a specific text or character in a group of diamonds. If a group of diamonds includes a mixture of diamonds having a blue fluorescence and diamonds not having a blue fluorescence, the physical arrangement of the diamonds having a blue fluorescence must be recorded for the individual members, so that it is judged whether or not the presented diamonds have the arrangement of the diamonds having a blue fluorescence equal to the arrangement recorded for one having the membership. Accordingly, even if the technique of Patent Literature 2 is employed in the confirmation of the membership, a confirming method of the membership similarly requires the recordation of a tremendous amount of data which proportionally increases as the number of members increases. A work to record the information is troublesome. And still, the system requires a backup copy of such data. And the centralized management of the data should induce the utilization of communication devices and the necessity of firm security.

It is accordingly an object in one aspect of the embodiment to provide a confirming method of membership capable of eliminating the burden of recordation, which is a simplified and reliable method.

### SOLUTION TO PROBLEM

According to an aspect of the invention, a confirming method of membership, comprising: identifying, under a visible light, a physical arrangement of all diamonds arranged in a single product, the physical arrangement designed to exhibit grace and beauty as a whole product; identifying, under ultraviolet radiation, an arrangement of a diamond or diamonds having a blue fluorescent equal to or stronger than strong blue in the physical arrangement; and distinguishing a group of all the diamonds in the physical arrangement having a blue fluorescent equal to or stronger than strong blue, from a group of the diamonds in the single product at least partly including a diamond or diamonds not having a blue fluorescent equal to or stronger than strong blue.

According to a second aspect of the invention, an ornamental device comprising: diamonds disposed on a single support product in a specific physical arrangement, all the diamonds in the specific physical arrangement having a blue fluorescent equal to or stronger than strong blue, wherein all the diamonds in the specific physical arrangement shining white and clear under a visible light, and shining blue under ultraviolet radiation keeping the specific physical arrangement distinguished from a group of diamonds in the specific physical arrangement, the group of diamonds comprising a mixture of a diamond or diamonds having a blue fluorescence equal to or stronger than strong blue and a diamonds or diamonds not having a blue fluorescence equal to or stronger than strong blue.

### ADVANTAGEOUS EFFECTS OF INVENTION

According to the first aspect, a group of all the diamonds in the physical arrangement having a blue fluorescence equal to or stronger than strong blue is utilized as a membership ID product. All the diamonds on the single support product shine white and clear under a visible light such as the natural light based on irradiation, dispersion and glance, so that the physical arrangement of the diamonds on the single support product can be identified. All the diamonds shine blue based on a blue fluorescence under black light or other ultraviolet radiation. The blue radiation of the diamonds under ultraviolet radiation is identical to the specific physical arrangement of the diamonds. On the other hand, few natural diamonds have a fluorescence equal to or stronger than strong blue. Accordingly, without an intentional collection of diamonds having a blue fluorescence equal to or stronger than strong blue, there hardly exists a group of diamonds all having a blue fluorescence equal to or stronger than strong blue in the specific physical arrangement. The membership can be confirmed in this manner. Since a group of diamonds functioning as a membership ID can be picked up by simply radiating visible light and ultraviolet light on the spot, recordation of a referential data is not required. A backup copy of such data is also not required. Utilization of communication devices is also not required. Necessity of security on data can be eliminated. It is possible to eliminate a burden of recording data and to provide a confirming method of membership which is a simplified and reliable method. Since no referential data is required in the first place, the membership remains anonymous.

The ornamental device of the second aspect allows the diamonds to shine white and clear under a visible light such as the natural light based on irradiation, dispersion and glance. The diamonds shine blue based on a blue fluorescence under black light or other ultraviolet radiation. Since all the diamonds on a single support product have a blue fluorescence stronger than strong blue, blue radiation of the diamonds under ultraviolet radiation is identical to the specific physical arrangement of the diamonds. An observer recognizes the specific physical arrangement of the diamonds on each of the support products under the natural light. If all the diamonds have a blue fluorescence equal to or stronger than strong blue for each of the support products, the observer reliably distinguishes the ornamental device of the aspect from the other groups of diamonds by subjecting the diamonds to black light.

### BRIEF DESCRIPTION OF THE DRAWINGS

Fig. 1 is a schematic diagram illustrating the structure of a membership confirmation system according to a first embodiment of the invention;
Fig. 2 is a plan view schematically illustrating a diamond necklace functioning as a membership ID;
Fig. 3 is a picture of diamonds depicting a blue fluorescence of strong blue and very strong blue;
Fig. 4 is a diagram illustrating a method of distinguishing the membership ID from a group of diamonds not functioning as a membership ID;
Fig. 5 is a schematic diagram illustrating the structure of a membership confirmation system according to a second embodiment of the invention; and
Fig. 6 is a schematic diagram illustrating the structure of a rental diamond system according to a third embodiment of the invention.

### REFERENCE SIGNS LIST

11...membership confirmation system
12...support product
13...diamond
21...membership confirmation system

### DESCRIPTION OF EMBODIMENTS

Embodiments of the present invention will be explained below with reference to the accompanying drawings.

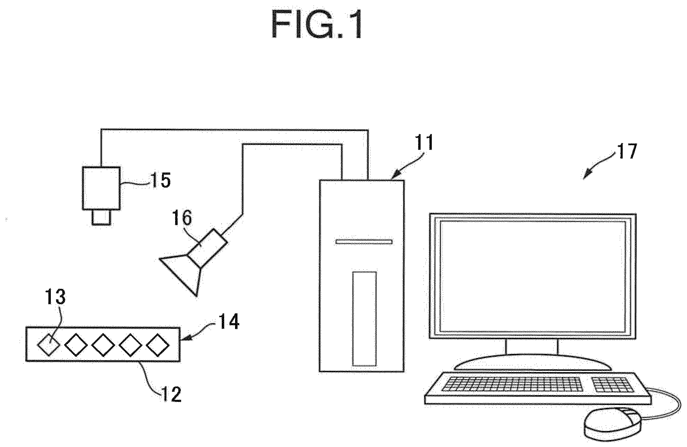

Fig. 1 schematically illustrates the structure of a membership confirmation system 11 according to a first embodiment of the invention. The membership confirmation system 11 includes a membership ID 14 comprising diamonds 13 fixed to a single support product (element) 12, an image capturing apparatus 15 capturing the image of the membership ID 14, a black light 16 causing ultraviolet radiation, and a computer apparatus 17 connected to the image capturing apparatus 15. The image capturing apparatus 15 is configured to generate an image data of the membership ID 14. The generated image data is transmitted to the computer apparatus 17. The computer apparatus 17 is configured to distinguish the membership ID 14 and a group of diamonds other than the membership ID 14 based on the image data.

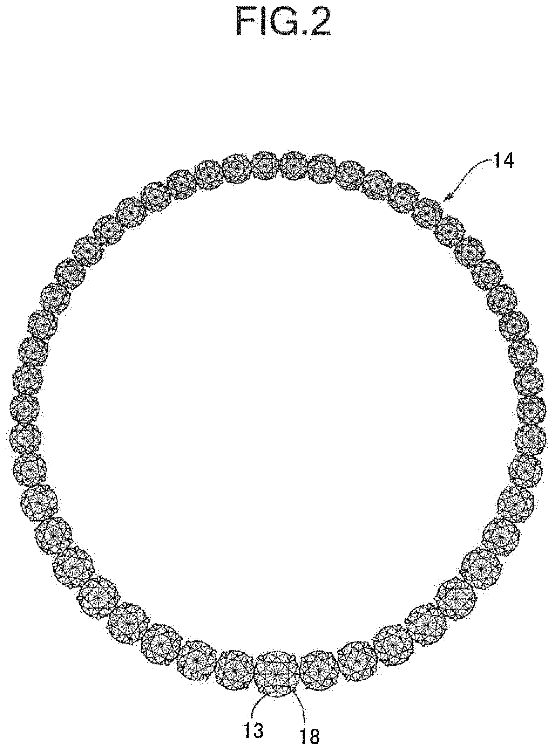

As depicted in Fig. 2, the membership ID 14 comprises a necklace configured in a single ring. The necklace includes, as a single support product 12, linked bases 18 forming a chain, for example. The bases 18 are made from a metallic material such as platinum, gold, or the like. An individual one of the diamonds 13 is fixed to the individual one of the bases 18. The diamonds 13 are disposed on the chain representing the single support product 12. All the diamonds 13 on the chain have a blue fluorescence equal to or stronger than strong blue, namely, strong blue or very strong blue. The membership ID 14 may be the diamonds 13 disposed all over the chain in this manner, or diamonds disposed on a pendant, a bracelet, an earring, a finger ring, an anklet, and the like, as a single support product. The diamonds 13 may have equal size or different sizes.

The computer apparatus 17 includes a central processing unit (CPU) implementing a software program so as to provide a confirming method of membership. The software program may be stored in a storage apparatus assembled in the computer apparatus 17, for example. In addition, the computer apparatus 17 may include a memory having a capacity enough to enable comparison between a pair of image data. An image data as a referential data for confirmation or distinction may not be stored in the computer apparatus 17 in any means.

The confirming method of membership is configured to cause the CPU to instruct the image capturing apparatus 15 to capture an image of the membership ID 14 under a visible light. The image capturing apparatus 15 captures an image of the membership ID 14 under a visible light such as natural light or room light or light from any lighting device. The diamonds 13 shine white and clear under a visible light such as the natural light based on irradiation, dispersion and glance. The image capturing apparatus 15 generates a first image data for the membership ID 14. The first image data specifies a physical arrangement of all the diamonds 13 disposed on the single support product 12. The first image data may temporarily be stored in the memory of the CPU, for example.

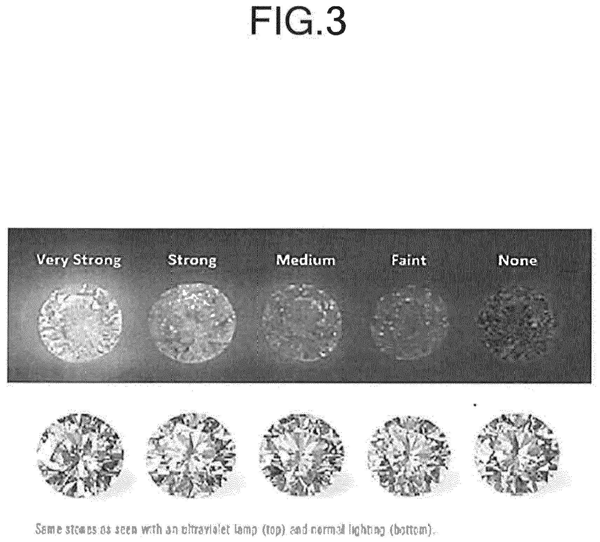

The CPU of the computer apparatus 17 then instruct the black light 16 to induce ultraviolet radiation. The black light 16 makes the ultraviolet radiation toward the membership ID 14. As depicted in Fig. 3, diamonds having a fluorescence of strong blue or very strong blue shine blue based on a blue fluorescence under black light or other ultraviolet radiation. Since the membership ID 14 includes all the diamonds 13 having a blue fluorescence equal to or stronger than strong blue, the blue radiation of the diamonds 13 under ultraviolet radiation is identical to the physical arrangement of the diamonds 13.

The CPU of the computer apparatus 17 instructs the image capturing apparatus 15 to capture an image of the membership ID 14 under the ultraviolet radiation. The image capturing apparatus 15 captures an image of the membership ID 14 under the ultraviolet radiation. The image capturing apparatus 15 generates a second image data for the membership ID 14. The second image data specifies an arrangement of diamonds having a blue fluorescence equal to or stronger than strong blue in the diamonds 13. The second image data is transmitted to the CPU.

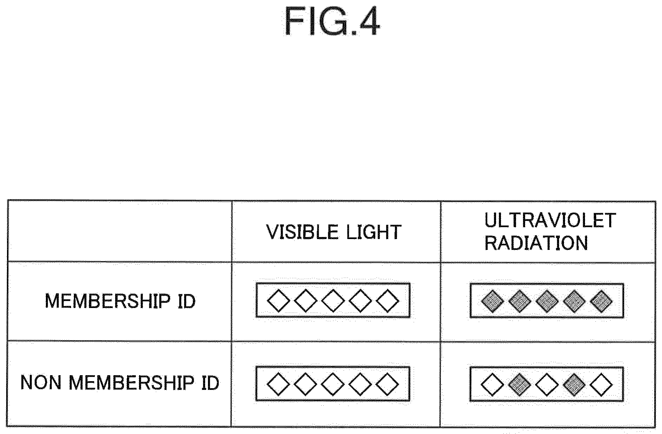

The CPU of the computer apparatus 17 is designed to compare the arrangement of the blue radiation specified in the second image data with the physical arrangement specified in the first image data. As depicted in Fig. 4, if the arrangement of the blue radiation is identical to the physical arrangement of the diamonds 13, the membership is confirmed. On the other hand, few natural diamonds have a fluorescence equal to or stronger than strong blue. Accordingly, without an intentional collection of diamonds having a blue fluorescence equal to or stronger than strong blue, there hardly exists a group of diamonds all having a blue fluorescence equal to or stronger than strong blue in the specific physical arrangement. As depicted in Fig. 4, the arrangement of the blue radiation cannot be identical to the physical arrangement of the diamonds 13. A group of diamonds except the membership ID 14 cannot be a proof of the membership.

Since a group of diamonds functioning as a membership ID can be picked up by simply radiating visible light and ultraviolet light on the spot, recordation of a referential data is not required. A backup copy of such data is also not required. Utilization of communication devices is also not required. Necessity of security on data can be eliminated. It is possible to eliminate a burden of recording data and to provide a confirming method of membership which is a simplified and reliable method. Since no referential data is required in the first place, the membership remains anonymous.

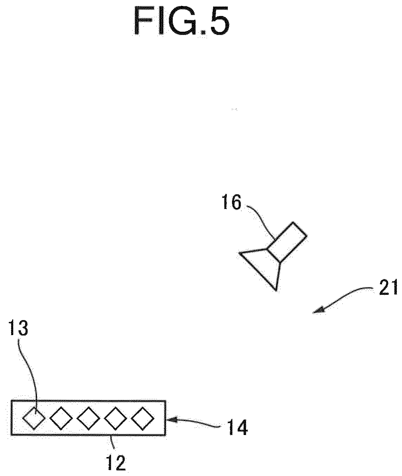

Fig. 5 schematically illustrates the structure of a membership confirmation system 21 according to a second embodiment. The membership confirmation system 21 includes a membership ID 14 comprising diamonds 13 fixed to a single support product (element) 12, and a black light 16 causing ultraviolet radiation. The membership ID 14 and the black light 16 are identical to those of the first embodiment. An operator distinguishes the membership ID 14 from a group of diamonds other than the membership ID 14 based on visual observation under a visible light and ultraviolet radiation. If the arrangement of the blue radiation is identical to the physical arrangement of the diamonds 13, the membership is confirmed. The arrangement of the blue radiation cannot be identical to the physical arrangement of the diamonds 13 in a group of diamonds except the membership ID 14. A group of diamonds except the membership ID 14 cannot be a proof of the membership.

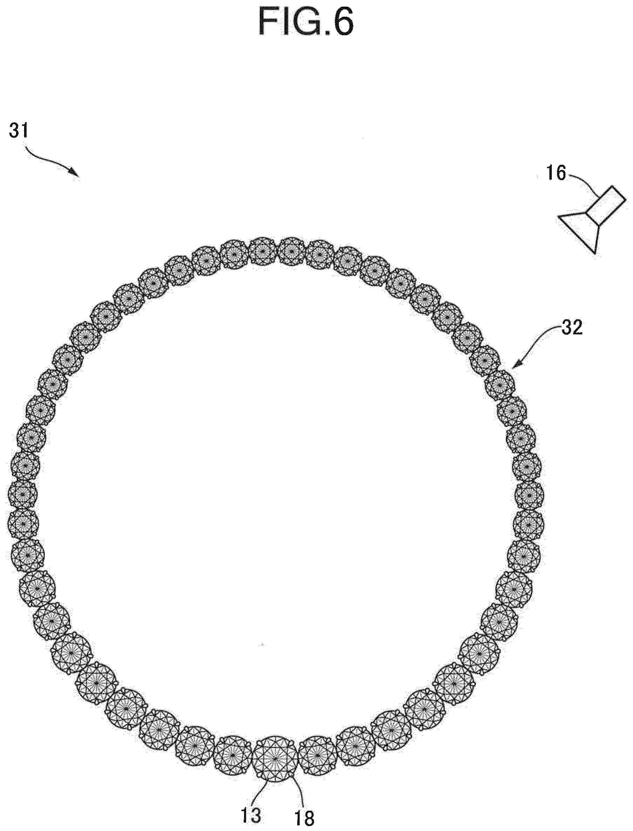

Fig. 6 schematically illustrates the structure of a rental diamond system 31 according to a third embodiment. The rental diamond system 31 includes a diamond necklace (ornamental device) 32 comprising diamonds 13 fixed to a single support product (element) 12, and a black light 16 causing ultraviolet radiation. The diamond necklace 32 is identical to the membership ID 14. An operator of a rental company distinguishes the diamond necklace 32 from a necklace other than the diamond necklace 32 based on visual observation under a visible light and ultraviolet radiation. If the arrangement of the blue radiation is identical to the physical arrangement of the diamonds 13, the membership is confirmed. The arrangement of the blue radiation cannot be identical to the physical arrangement of the diamonds 13 in a group of diamonds except the membership ID 14. The arrangement of the blue radiation cannot be identical to the physical arrangement of the diamonds 13 in a necklace except the mentioned diamond necklace 32.

All the diamonds 13 disposed on the single support product 12 in a specific physical arrangement have a blue fluorescent equal to or stronger than strong blue. All the diamonds 13 in the specific physical arrangement shine white and clear under a visible light, and shining blue in an arrangement identical to the specific physical arrangement under ultraviolet radiation. The diamond necklace 32 is thus distinguished from a diamond necklace including a group of diamonds in the specific physical arrangement, the group of diamonds comprising a mixture of a diamond or diamonds having a blue fluorescence equal to or stronger than strong blue and a diamonds or diamonds not having a blue fluorescence equal to or stronger than strong blue.

An ornamental device such as a diamond ring, a diamond necklace, or the like is well known. Diamonds shine white and clear under a visible light such as the natural light based on irradiance, dispersion and glance. People usually like such a clear brightness, so that diamonds are evaluated by observing the 4C's, namely, Carat Weight, Cut, Color, and Clarity. A colorless diamond having the excellent cut and less inclusion or blemish demands a higher price.

For example, when an ornamental device having diamonds is lent to someone, even an expert cannot easily find out an ornamental device in which all diamonds are replaced with glass imitation pieces, or an ornamental device partly including a glass imitation piece or pieces instead of a diamond or diamonds, under a visible light, because a diamond and a glass imitation cannot be distinguished from each other under a visible light.

Some natural diamonds shine white and clear under a visible light such as the natural light and shine blue under the ultraviolet radiation. However, few natural diamonds have a blue fluorescence equal to or stronger than strong blue. Accordingly, if all the diamonds 13 in a group have a blue fluorescence equal to or stronger than strong blue, the group can be distinguished from a group of diamonds, distributed in general, at least partly including a diamond or diamonds not having a blue fluorescence stronger than strong blue. In the case where an ornamental device includes all diamonds replaced with glass imitation pieces, or an ornamental device partly including a glass imitation piece or pieces instead of a diamond or diamonds, the glass imitation pieces fail to exhibit a blue fluorescence under ultraviolet radiation. The ornamental device suffers from a black spot or spots existing in the specific physical arrangement under the ultraviolet radiation. The arrangement of blue radiation cannot be identical to the physical arrangement of the diamonds 13. The diamonds 13 all having a blue fluorescence equal to or stronger than strong blue is distinguished from ornamental devices at least partly including a glass imitation piece or pieces instead of a diamonds or diamonds. An operator of a rental company, even without an experienced skill, is allowed to distinguish a group of true diamonds from fake diamonds by simply utilizing a tool such as a black light 16 causing ultraviolet radiation.

## Claims

1. A confirming method of membership, comprising:
identifying, under a visible light, a physical arrangement of all diamonds arranged in a single product, the physical arrangement designed to exhibit grace and beauty as a whole product;
identifying, under ultraviolet radiation, an arrangement of a diamond or diamonds having a blue fluorescent equal to or stronger than strong blue in the physical arrangement; and
distinguishing a group of all the diamonds in the physical arrangement having a blue fluorescent equal to or stronger than strong blue, from a group of all the diamonds in the single product at least partly including a diamond or diamonds not having a blue fluorescent equal to or stronger than strong blue.

2. An ornamental device comprising: only diamonds all arranged in a single product in a specific physical arrangement designed to exhibit grace and beauty as a whole product,
all the diamonds in the specific physical arrangement having a blue fluorescent equal to or stronger than strong blue, so that all the diamonds in the specific physical arrangement form a clear visibility of the specific physical arrangement under a visible light, and form a blue visibility of the specific physical arrangement under ultraviolet radiation, wherein an arrangement of the blue visibility coincides with an arrangement of the clear visibility, the ornamental device excluding a diamond not having a blue fluorescence equal to or stronger than strong blue.
